(19) Europäisches Patentamt
European Patent Office
Office européen des brevets

(11) **EP 4 322 672 A1**

(12) **EUROPEAN PATENT APPLICATION**
published in accordance with Art. 153(4) EPC

(43) Date of publication:
**14.02.2024 Bulletin 2024/07**

(21) Application number: **21935561.7**

(22) Date of filing: **08.04.2021**

(51) International Patent Classification (IPC):
**H04W 72/12** (2023.01)     **H04W 74/00** (2009.01)
**H04W 74/08** (2024.01)

(52) Cooperative Patent Classification (CPC):
**H04W 72/54; H04W 16/14; Y02D 30/70**

(86) International application number:
**PCT/CN2021/086018**

(87) International publication number:
**WO 2022/213331 (13.10.2022 Gazette 2022/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Beijing Xiaomi Mobile Software Co., Ltd.**
**Beijing 100085 (CN)**

(72) Inventor: **LI, Mingju**
**Beijing 100085 (CN)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(54) **DATA TRANSMISSION METHOD AND APPARATUS, AND STORAGE MEDIUM**

(57)     The present disclosure relates to a data transmission method and apparatus, and a storage medium. The data transmission method comprises: determining one or more channel access types, and determining a plurality of discontinuous time units; according to the channel access type, sensing a channel before a corresponding time unit, and in response to the sensing result that the channel is idle, performing uplink data transmission on the corresponding time unit. In the present disclosure, a terminal can determine channel access types corresponding to multiple discontinuous time units.

FIG. 2

## Description

## TECHNICAL FIELD

The disclosure relates to the field of communication technologies, and particularly to a method and an apparatus for data transmission or reception, and a storage medium.

## BACKGROUND

A communication mode based on an unlicensed spectrum or a shared spectrum is proposed for new radio (NR) wireless communication networks. For example, a NR frequency band of 52.6GHz is an unlicensed spectrum. A device in an unlicensed frequency band needs to perform a channel sensing on an unlicensed spectrum before transmitting data. A channel occupancy time may be determined when the channel is sensed to be idle. The data may be transmitted on the unlicensed spectrum before the channel occupation time ends. It senses whether the channel is idle again after the channel occupation time ends.

Due to a limited channel occupation time, it is desirable to introduce that one downlink control information (DCI) schedules a plurality of physical downlink shared channels (PDSCHs) or one DCI schedules a plurality of physical uplink shared channels (PUSCHs) to save control signalings. That is, one DCI schedules a plurality of uplink slots or one DCI schedules a plurality of downlink slots.

In the related art, it is supported that one DCI schedules a plurality of continuous downlink slots or one DCI schedules a plurality of continuous uplink slots. Furthermore, the DCI indicates a channel access type for performing a channel sensing before a plurality of continuous uplink slots. In a time-division-duplex (TDD) communication mode, when uplink and downlink slots change flexibly or when service priorities of various terminals differ slightly, a large number of continuous downlink slots or continuous uplink slots may not be allocated to one terminal and the channel access type for the channel sensing before the plurality of continuous uplink slots may be no longer sufficient.

## SUMMARY

A method and an apparatus for data transmission or reception, and a storage medium are provided in the disclosure to overcome problems existing in the related art.

According to a first aspect of embodiments of the disclosure, a method for data transmission or reception is provided. The method for data transmission or reception is performed by a terminal. The method includes:

determining one or more channel access types and a plurality of discontinuous time units; sensing a channel before a corresponding time unit based on the channel access type; and performing an uplink data transmission on the corresponding time unit in response to sensing that the channel is idle.

In an implementation, determining the one or more channel access types includes:
determining the one or more channel access types based on first indication information; in which the first indication information includes a first indication field, the first indication field includes one or more codepoints, and there is a corresponding relationship between codepoints and channel access types.

In an implementation, the corresponding relationship between codepoints and channel access types is determined at least one of
based on a predefinition; or based on second indication information.

In an implementation, a number of the one or more channel access types is one, and there is a one-to-one corresponding relationship between codepoints and channel access types.

In an implementation, a number of the one or more channel access types is one, and there is a one-to-one corresponding relationship between codepoints and first combinations including channel access types; and
the first combination includes at least one of:
a combination between a channel access type and a cyclic prefix; a combination between a channel access type and a channel access priority class; or a combination among a channel access type, a cyclic prefix, and a channel access priority class.

In an implementation, the plurality of discontinuous time units include a plurality of time unit groups, and each of the plurality of time unit groups includes continuous time units.

In an implementation, channel access types corresponding to the plurality of time unit groups are a channel access type indicated by the first indication information.

In an implementation, channel access types corresponding to a part of time unit groups in the plurality of time unit groups are a channel access type indicated by the first indication information, and channel access types corresponding to another part of time unit groups in the plurality of time unit groups are determined based on a rule and/or a parameter.

In an implementation, the rule and/or parameter includes at least one of:
whether a current time unit group is within a channel occupation time of a network device; whether a current time unit group is within a channel occupation time of the terminal; an interval between a current time unit group and a previous time unit group; or an interval between a current time unit group and receiving downlink data from a network device.

In an implementation, a number of the one or more channel access types is more than one, there is a corresponding relationship between codepoints and channel access type combinations, and the channel access type combination includes one or more channel access types.

In an implementation, a number of the one or more channel access types is more than one, there is a corresponding relationship between codepoints and second combinations including channel access type combinations, and the channel access type combination includes one or more channel access types; and

the second combination includes at least one of: a combination between a channel access type combination and a cyclic prefix; a combination between a channel access type combination and a channel access priority class; or a combination among a channel access type combination, a cyclic prefix, and a channel access priority class.

In an implementation, the one or more channel access types included in the channel access type combination is preconfigured, or determined based on a high layer signaling.

In an implementation, the corresponding relationship between codepoints and second combinations is preconfigured, or determined based on a high layer signaling.

In an implementation, the plurality of discontinuous time units include a plurality of time unit groups, each of the plurality of time unit groups including continuous time units, and there is a corresponding relationship between channel access types comprised in channel access type combinations and time unit groups.

According to a second aspect of embodiments of the disclosure, a method for data transmission or reception is provided. The method for data transmission or reception is performed by a network device. The method includes:

transmitting first indication information for indicating one or more channel access types; in which the one or more channel access types are configured for a terminal to perform a channel sensing before performs an uplink data transmission on a plurality of discontinuous time units.

In an implementation, the first indication information includes a first indication field, the first indication field includes one or more codepoints, and there is a corresponding relationship between codepoints and channel access types.

In an implementation, the method for data transmission or reception further includes:

transmitting second indication information for indicating the corresponding relationship between codepoints and channel access types.

In an implementation, a number of the one or more channel access types is one, and there is a one-to-one corresponding relationship between codepoints and channel access types.

In an implementation, a number of the one or more channel access types is one, and there is a one-to-one corresponding relationship between codepoints and first combinations including channel access types; and

the first combination includes at least one of: a combination between a channel access type and a cyclic prefix; a combination between a channel access type and a channel access priority class; or a combination among a channel access type, a cyclic prefix, and a channel access priority class.

In an implementation, the plurality of discontinuous time units include a plurality of time unit groups, and each of the plurality of time unit groups includes continuous time units.

In an implementation, a number of the one or more channel access types is more than one, there is a corresponding relationship between codepoints and channel access type combinations, and the channel access type combination includes one or more channel access types.

In an implementation, a number of the one or more channel access types is more than one, there is a corresponding relationship between codepoints and second combinations including channel access type combinations, and the channel access type combination includes one or more channel access types; and

the second combination includes at least one of:

a combination between a channel access type combination and a cyclic prefix;
a combination between a channel access type combination and a channel access priority class; or
a combination among a channel access type combination, a cyclic prefix, and a channel access priority class.

In an implementation, the method for data transmission or reception further includes:

transmitting third indication information for indicating the one or more channel access types included in the channel access type combination.

In an implementation, the method for data transmission or reception further includes:

transmitting fourth indication information for indicating the corresponding relationship between codepoints and second combinations.

In an implementation, the plurality of discontinuous time units include a plurality of time unit groups, each of the plurality of time unit groups including continuous time units, and there is a corresponding relationship between channel access types included in channel access type combinations and time unit groups.

According to a third aspect of embodiments of the disclosure, an apparatus for data transmission or reception is provided. The apparatus for data transmission or reception includes:

a processing unit, configured to determine one or more channel access types and a plurality of discontinuous time units; and a communication unit, configured to sense a channel before a corresponding time unit based on the channel access type; and perform an uplink data transmission on the corresponding time unit in response to sensing that the channel is idle.

In an implementation, the processing unit determines the one or more channel access types based on first indication information; in which the first indication information includes a first indication field, the first indication field includes one or more codepoints, and there is a corresponding relationship between codepoints and channel access types.

In an implementation, the processing unit determines the corresponding relationship between codepoints and channel access types by at least one of: based on a predefinition; or based on second indication information.

In an implementation, a number of the one or more channel access types is one, and there is a one-to-one corresponding relationship between codepoints and channel access types.

In an implementation, a number of the one or more channel access types is one, and there is a one-to-one corresponding relationship between codepoints and first combinations including the one or more channel access types.

The first combination includes at least one of a combination between a channel access type and a cyclic prefix; a combination between a channel access type and a channel access priority class; or a combination among a channel access type, a cyclic prefix, and a channel access priority class.

In an implementation, the plurality of discontinuous time units include a plurality of time unit groups, and each of the plurality of time unit groups includes continuous time units.

In an implementation, channel access types corresponding to the plurality of time unit groups are a channel access type indicated by the first indication information.

In an implementation, channel access types corresponding to a part of time unit groups in the plurality of time unit groups are a channel access type indicated by the first indication information, and channel access types corresponding to another part of time unit groups in the plurality of time unit groups are determined based on a rule and/or a parameter.

In an implementation, the rule and/or parameter includes at least one of: whether a current time unit group is within a channel occupation time of a network device; whether a current time unit group is within a channel occupation time of the terminal; an interval between a current time unit group and a previous time unit group; or an interval between a current time unit group and receiving downlink data from a network device.

In an implementation, a number of the one or more channel access types is more than one, there is a corresponding relationship between codepoints and channel access type combinations, and the channel access type combination includes one or more channel access types.

In an implementation, a number of the one or more channel access types is more than one, there is a corresponding relationship between codepoints and second combinations including channel access type combinations, and the channel access type combination includes one or more channel access types. The second combination includes at least one of: a combination between a channel access type combination and a cyclic prefix; a combination between a channel access type combination and a channel access priority class; or a combination among a channel access type combination, a cyclic prefix, and a channel access priority class.

In an implementation, the one or more channel access types included in the channel access type combination is preconfigured, or determined based on a high layer signaling.

In an implementation, the corresponding relationship between codepoints and second combinations is preconfigured, or determined based on a high layer signaling.

In an implementation, the plurality of discontinuous time units include a plurality of time unit groups, each of the plurality of time unit groups including continuous time units, and there is a corresponding relationship between channel access types included in channel access type combinations and time unit groups.

According to a fourth aspect of embodiments of the disclosure, an apparatus for data transmission or reception is provided and implemented in a network device. The apparatus for data transmission or reception includes:

a transmitting unit, configured to transmit first indication information for indicating one or more channel access types; in which the one or more channel access types are configured for a terminal to perform a channel sensing before performs an uplink data transmission on a plurality of discontinuous time units.

In an implementation, the first indication information includes a first indication filed, the first indication filed includes one or more codepoints, and there is a corresponding relationship between codepoints and channel access types.

In an implementation, the transmitting unit is further configured to transmit second indication information for indicating the corresponding relationship between codepoints and channel access types.

In an implementation, a number of the one or more channel access types is one, and there is a one-to-one corresponding relationship between codepoints and channel access types.

In an implementation, a number of the one or more channel access types is one, and there is a one-to-one corresponding relationship between codepoints and first combinations including the one or more channel access types; and

the first combination includes at least one of:

a combination between a channel access type and a cyclic prefix; a combination between a channel access type and a channel access priority class; or a combination among a channel access type, a cyclic prefix, and a channel access priority class.

In an implementation, the plurality of discontinuous time units include a plurality of time unit groups, and each of the plurality of time unit groups includes continuous time units.

In an implementation, a number of the one or more channel access types is more than one, there is a corresponding relationship between codepoints and channel access type combinations, and the channel access type combination includes one or more channel access types.

In an implementation, a number of the one or more channel access types is more than one, there is a corresponding relationship between codepoints and second combinations including channel access type combinations, and the channel access type combination includes one or more channel access types. The second combination includes at least one of:

a combination between a channel access type combination and a cyclic prefix; a combination between a channel access type combination and a channel access priority class; or a combination among a channel access type combination, a cyclic prefix, and a channel access priority class.

In an implementation, the transmitting unit is further configured to: transmit third indication information for indicating the one or more channel access types included in the channel access type combination.

In an implementation, the transmitting unit is further configured to transmit fourth indication information for indicating the corresponding relationship between codepoints and second combinations.

In an implementation, the plurality of discontinuous time units include a plurality of time unit groups, each of the plurality of time unit groups including continuous time units, and there is a corresponding relationship between channel access types included in channel access type combinations and the time unit groups.

According to a fifth aspect of embodiments of the disclosure, a device for data transmission or reception is provided and includes:

a processor; and a memory for storing instructions executable by the processor.

The processor is configured to perform the method for data transmission or reception in the first aspect or in any one implementation of the first aspect.

According to a sixth aspect of embodiments of the disclosure, a device for data transmission or reception is provided and includes:

a processor; and a memory for storing instructions executable by the processor.

The processor is configured to perform the method for data transmission or reception in the second aspect or in any one implementation of the second aspect.

According to a seventh aspect of embodiments of the disclosure, a storage medium stored with instructions is provided. When the instructions in the storage medium are executed by a processor of a terminal, the terminal is caused to perform the method for data transmission or reception in the first aspect or any one implementation of the first aspect.

According to an eighth aspect of embodiments of the disclosure, a storage medium stored with instructions is provided. When the instructions in the storage medium are executed by a processor of a terminal, the terminal is caused to perform the method for data transmission or reception in the second aspect or any one implementation of the second aspect.

The technical solutions according to embodiments of the disclosure may include the following beneficial effects: the one or more channel access types are determined and the channel(s) is sensed based on the channel access type(s). The uplink data transmission is performed on the plurality of discontinuous time units in response to sensing that the channel(s) is idle based on the channel access type(s), so that the terminal may determine channel access type(s) corresponding to the plurality of discontinuous time units.

It should be understood that both the foregoing general description and the following detailed description are exemplary and explanatory only and are not restrictive of the disclosure.

**BRIEF DESCRIPTION OF THE DRAWINGS**

The accompanying drawings, which are incorporated in and constitute a part of this specification, illustrate embodiments consistent with the disclosure and, together with the description, serve to explain the principles of the disclosure.

FIG. 1 is a diagram illustrating a wireless communication system according to some embodiments.
FIG. 2 is a flowchart illustrating a method for data transmission or reception according to some embodiments.
FIG. 3 is a flowchart illustrating a method for data transmission or reception according to some embodiments.
FIG. 4 is a flowchart illustrating a method for data transmission or reception according to some embodiments.
FIG. 5 is a block diagram illustrating an apparatus for data transmission or reception according to some embodiments.
FIG. 6 is a block diagram illustrating an apparatus for data transmission or reception according to some embodiments.
FIG. 7 is a block diagram illustrating a device for data transmission or reception according to some embodiments.

FIG. 8 is a block diagram illustrating a device for data transmission or reception according to some embodiments.

## DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of embodiments do not represent all implementations consistent with the disclosure. Instead, they are merely examples of apparatuses and methods consistent with aspects related to the disclosure as recited in the appended claims.

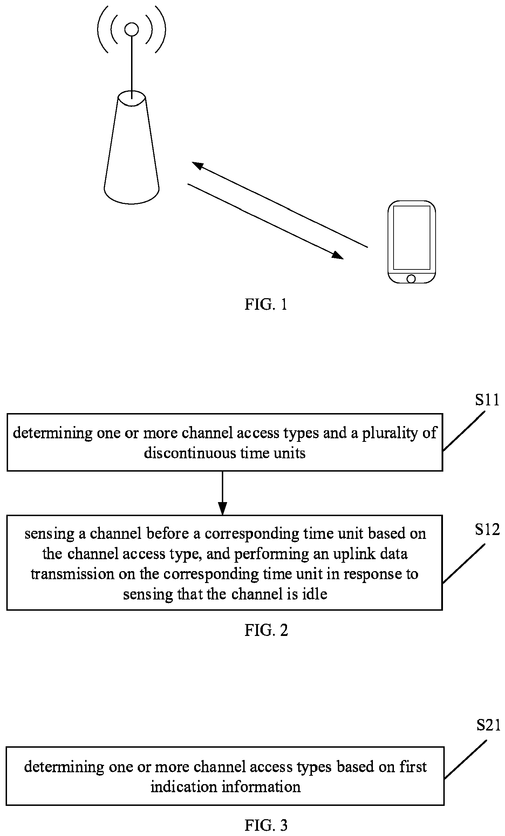

A method for data transmission or reception provided in embodiments of the disclosure may be applicable to a wireless communication system as illustrated in FIG. 1. As illustrated in FIG. 1, the wireless communication system includes a terminal and a network device. The terminal is connected to the network device via wireless resource(s) and performs a data transmission and reception.

It should be understood that, the wireless communication system as illustrated in FIG. 1 is only illustrative and the wireless communication system may further include other network devices not illustrated in FIG. 1, for example, a core network device, a wireless relay device, and a wireless backhaul device. A number of network devices and a number of terminals in the wireless communication system are not limited in embodiments of the disclosure.

It should be further understood that, the wireless communication system in embodiments of the disclosure is a network that provides a wireless communication function. The wireless communication system may adopt different communication technologies, for example, code division multiple access (CDMA), wideband code division multiple access (WCDMA), time division multiple access (TDMA), frequency division multiple access (FDMA), orthogonal frequency-division multiple access (OFDMA), single Carrier FDMA (SC-FDMA), and carrier sense multiple access with collision avoidance. The network may be divided into a 2G (generation) network, a 3G network, a 4G network, or a future evolution network such as a 5G network, based on capacities, rates, latencies and other factors of different networks. The 5G network may also be referred to as a new radio (NR) network. For ease of description, the wireless communication network is simply referred to as the network in the disclosure sometimes.

Furthermore, the network device involved in the disclosure may also be referred to as a wireless access network device. The wireless access network device may be a base station, an evolved node B (eNB), a home base station, an access point (AP) in a wireless fidelity (Wi-Fi) system, a wireless relay node, a wireless backhaul node, a transmission point (TP), a transmission and reception point (TRP), or the like. It also may be a gNB in an NR system or may be a component or part of devices constituting the base station. The network device further may be a vehicle-mounted device in an Internet of Vehicles (V2X) communication system. It should be understood that, a specific technology and a specific device form adopted by the network device are not limited in the embodiments of the disclosure.

Further, the terminal involved in the disclosure further may be referred to as a terminal device, a user equipment (UE), a mobile station (MS), a mobile terminal (MT), or the like, which is a device that provides voice and/or data connectivity to a user, for example, the terminal may be a handheld device or vehicle-mounted device with a wireless connection function. At present, some examples of the terminal may include a mobile phone, a pocket personal computer (PPC), a palm computer, a personal digital assistant (PDA), a notebook computer, a tablet computer, a wearable device, or a vehicle-mounted device. In addition, the terminal device further may be a vehicle-mounted device in a V2X communication system. It should be understood that, a specific technology and a specific device form adopted by the terminal are not limited in the embodiments of the disclosure.

In a method for data transmission or reception involved in embodiments of the disclosure, a communication based on an unlicensed spectrum is performed between the terminal and the network device. The terminal needs to perform a channel sensing on the unlicensed spectrum before transmitting data. A channel occupancy time may be determined when the channel is sensed to be idle. The data may be transmitted on the unlicensed spectrum before the channel occupation time ends. It sensed whether the channel is idle again after the channel occupation time ends.

Due to a limited channel occupation time, one DCI schedules a plurality of continuous downlink slots (and/or flexible slots) or one DCI schedules a plurality of continuous uplink slots (and/or flexible slots) to save control signalings. It should be noted that, the downlink slot involved in the disclosure includes the downlink slot and/or the flexible slot and the uplink slot includes the uplink slot and/or the flexible slot. A downlink symbol includes a downlink symbol and/or a flexible symbol. An uplink symbol includes an uplink symbol and/or a flexible symbol. A symbol in the downlink slot includes a downlink symbol and/or a flexible symbol. A symbol in the uplink slot includes an uplink symbol and/or a flexible symbol. When uplink and downlink slots of the time-division-duplex (TDD) change flexibly or service priorities of various terminals differ slightly, a large number of continuous downlink slots or continuous uplink slots may not be allocated to one terminal. Therefore, a plurality of discontinuous downlink slots may be scheduled via one DCI or a plurality of discontinuous uplink slots may be scheduled via one DCI. In a conventional manner, the DCI may indicate one channel access type for performing a channel sensing for a plurality of continuous uplink slots. However, for a plurality of discontinuous UL slots scheduled by one DCI, due to interruption(s) among the UL slots, when the UL slot is occupied again for transmitting after each interruption ends, a channel sensing may be performed in a channel access process. Therefore, a conventional mode for indicating a channel access type is not suitable for channel sensing in the plurality of discontinuous DL slots or UL slots.

Therefore, a method for data transmission or reception is provided in embodiments of the disclosure. In the method for data transmission or reception, one or more channel access types are determined and a plurality of discontinuous time units are determined. A channel is sensed before a corresponding time unit based on the channel access type. An uplink data transmission is performed on the corresponding time unit in response to sensing that the channel is idle. In the disclosure, the terminal may determine channel access type(s) corresponding to a plurality of discontinuous time units.

It should be understood that, the channel access type involved in embodiments of the disclosure may include at least one of the following channel access types.

A: first channel access type
The terminal detects that the channel is idle within $T_d$ (16+M*9 $\mu$s), and when N is reduced to 0 at step 4, the terminal may perform a transmission. At step 1, set $N = N_{init}$, $N_{init}$ is any value between 0 and $CW_p$, and enter step 4. At step 2, if $N > 0$ and the terminal selects to reduce N, $N = N - 1$. At step 3, a channel is sensed within another slot duration (9 $\mu$ s), and if the channel is sensed to be idle, enter step 4 or else enter step 5. At step 4, if $N = 0$, stop; or else, enter step 2. At step 5, if the channel continues to be sensed, the channel may be sensed to be busy or to be idle within a defer duration $T_d$. At step 6, if the channel is idle within the defer duration, enter step 4 or else enter step 5.
B: second channel access type: if the terminal detects that the channel is idle within 25 $\mu$s, an uplink transmission may be performed immediately.
C: third channel access type: if the terminal detects that the channel is idle within 16 $\mu$ s, an uplink transmission may be performed immediately.
D: fourth channel access type: if the terminal does not need to detect the channel, an uplink transmission may be performed immediately.

Furthermore, the time unit involved in embodiments of the disclosure may include an uplink time unit, or may include a flexible time unit, or may include an uplink time unit and a flexible time unit. The flexible time unit should be understood as not determining whether it is a downlink time unit or an uplink time unit. For example, when a DCI corresponding to a DCI format for scheduling a physical downlink shared channel (PDSCH) schedules the flexible time unit, the flexible time unit may be used for a downlink transmission. When a DCI corresponding to a DCI format for scheduling a physical uplink shared channel (PUSCH) schedules the flexible time unit, the flexible time unit may be used for an uplink transmission.

Furthermore, performing the uplink data transmission on the plurality of discontinuous time units in embodiments of the disclosure, may include performing a transmission of at least one of a PUSCH, a physical random access channel (PRACH), a sounding reference signal (SRS), or a physical uplink control channel (PUCCH) on the plurality of discontinuous time units.

Furthermore, the plurality of discontinuous time units in embodiments of the disclosure may include a plurality of time unit groups, and each of the plurality of time unit groups includes continuous time units. The time unit includes at least one of a slot, a symbol, or a subframe.

In an example, when one DCI schedules a plurality of discontinuous UL slots, the terminal determines a channel access type before each UL slot group (slots in each group are continuous), and performs a channel sensing based on the channel access type before each UL slot group. An uplink data transmission is performed on the corresponding UL slot group in response to sensing that the channel is idle.

FIG. 2 is a flowchart illustrating a method for data transmission or reception according to some embodiments. As illustrated in FIG. 2, the method for data transmission or reception is performed by a terminal and includes the following steps.

At step S11, one or more channel access types and a plurality of discontinuous time units are determined.

At step S12, a channel is sensed before a corresponding time unit based on the channel access type and an uplink data transmission is performed on the corresponding time unit in response to sensing that the channel is idle.

In embodiments of the disclosure, the terminal may determine N channel access type(s), where N is an integer greater than 0. The terminal determines N channel access type(s), and performs the channel sensing based on the channel access type(s), and performs the uplink data transmission on the plurality of discontinuous time units in response to sensing that the channel is idle.

The time unit includes at least one of a slot, a symbol, or a subframe. The plurality of discontinuous time units may include a plurality of discontinuous uplink time units and/or a plurality of discontinuous flexible time units.

In an implementation, the plurality of discontinuous time units include a plurality of time unit groups, and each of the plurality of time unit groups includes continuous time units. For example, M discontinuous uplink time units include L uplink time unit groups, and X time units in each uplink time unit group are continuous. M is an integer greater than 1, L is less than or equal to M, and L is an integer greater than 1.

Furthermore, the uplink data transmission may include at least one of a PUSCH, a PRACH, an SRS, or a PUCCH.

In the method for data transmission or reception provided in embodiments of the disclosure, the terminal may receive indication information from the network device, and determine the one or more channel access types based on the indication information. For convenience of description, the indication information for determining the one or more channel access types is referred to as first indication information.

FIG. 3 is a flowchart illustrating a method for data transmission or reception according to some embodiments. As illustrated in FIG. 3, the method for data transmission or reception is performed by a terminal and includes the following step.

At step S21, one or more channel access types are determined based on first indication information.

The terminal receives the first indication information for indicating N channel access types.

In an implementation, the first indication information is DCI.

The first indication information indicating N channel access types may be indicating by a codepoint corresponding to a certain indication field in the first indication information. For example, the first indication information indicates N channel access types, and the indication manner is that there is a corresponding relationship between the codepoint corresponding to the certain indication field (referred to as a first indication field in the following) in the first indication information and one or N channel access types. That is, the first indication information includes a first indication field, the first indication field includes one or more codepoints, and there is a corresponding relationship between codepoints and channel access types.

In embodiments of the disclosure, the corresponding relationship between codepoints and channel access types may be predefined, for example, predefined by a standard. The corresponding relationship between codepoints and channel access types may be determined based on a high layer signaling from a network device, for example, second indication information from the network device. For example, the second indication information is a radio resource control (RRC) and/or a medium access control (MAC) control element (CE). The terminal may receive the second indication information from the network device, and determine the corresponding relationship between codepoints and channel access types based on the second indication information. That is, in the method for data transmission provided in embodiments of the disclosure, the corresponding relationship between codepoints and channel access types is determined at least one of: based on a predefinition; or based on second indication information.

In embodiments of the disclosure, there may be one or more channel access types determined.

In an implementation, when a number of the one more channel access types is one (that is, there may be one channel access type), there is a one-to-one corresponding relationship between codepoints and channel access types. For example, taking the codepoint being 2 bits (that is, a number of bits of the codepoint may support a number of channel access types, such as, if there are I channel access types, and the number of bits is $\lceil \log_2(I) \rceil$.

a) 00: corresponds to a first channel access type;
b) 01: corresponds to a second channel access type;
c) 10: corresponds to a third channel access type; and
d) 11: corresponds to a fourth channel access type.

In another implementation, when a number of the one more channel access types is one (that is, there may be one channel access type), there is one-to-one corresponding relationship between codepoints and first combinations including channel access types.

The first combination includes at least one of: a combination between a channel access type and a cyclic prefix (CP), a combination between a channel access type and a channel access priority class (CAPC); or a combination among a channel access type, a CP, and a CAPC. That is, the codepoint one to one corresponds to the combination of the channel access type and at least one of: the CP or the CAPC.

In an implementation, the codepoint one to one corresponds to the combination of the channel access type and the CP. For example, (a number of bits of the codepoint may support a product of a number of channel access types and a number of CPs, and if a product is I, the number of bits is $\lceil \log_2(I) \rceil$:

i. 00: for a first channel access type and a first CP
ii. 01: for a second channel access type and a first CP
iii. 10: for a first channel access type and a second CP
iv. 11: for a second channel access type and a second CP

In another implementation, the codepoint one to one corresponds to the combination of the channel access type and the CAPC. For example (a number of bits of the codepoint may support a product of a number of channel access types and a number of CAPCs, if a product is I, the number of bits is $\lceil \log_2(I) \rceil)$:

i. 00: for a first channel access type and a first CAPC
ii. 01: for a second channel access type and a first CAPC
iii. 10: for a first channel access type and a second CAPC

iv. 11: for a second channel access type and a second CAPC

In another implementation, the codepoint one to one corresponds to the combination of the channel access type, the CP, and the CAPC. For example (a number of bits of the codepoint may support a product of a number of channel access types, a number of CAPCs, and a number of CPs, and if a product is I, the number of bits is $\lceil \log_2(I) \rceil$:

i. 00: for a first channel access type and a first CAPC and a first CP

ii. 01: for a second channel access type and a first CAPC and a first CP

iii. 10: for a first channel access type and a second CAPC and a first CP

iv. 11: for a second channel access type and a second CAPC and a first CP

In the method for data transmission or reception provided in embodiments of the disclosure, the plurality of discontinuous time units include a plurality of time unit groups, and each of the plurality of time unit groups includes continuous time units. For example, the plurality of discontinuous time units are M discontinuous uplink time units, where M is an integer greater than M. The M discontinuous uplink time units include L uplink time unit groups, and X time units in each uplink time unit group are continuous. L is less than or equal to M and L is an integer greater than 1.

In an implementation, the terminal may receive the first indication information. The first indication information is configured to indicate M discontinuous time units, where M is an integer greater than 1. The first indication information may be further configured to indicate N channel access types, where N is an integer greater than 0.

In an implementation, the terminal may receive other indication information. This indication information is configured to indicate M discontinuous uplink time units, where M is an integer greater than 1. This indication information is different from the first indication information.

In embodiments of the disclosure, the terminal may determine respectively the channel access type for each of the plurality of time unit groups.

In an implementation, the terminal determines one channel access type. When a channel sensing is performed on a plurality of discontinuous time unit groups, the terminal may determine respectively the channel access types for each of the plurality of time unit groups. For example, when N=1, but a number L of L time unit groups included in the M discontinuous uplink time units is greater than 1, it is determined that the channel access type corresponding to each time unit group includes one of the following manners.

In a first manner, the channel access type in the indication information is configured for the channel sensing before the L time unit groups. That is, channel access types corresponding to the plurality of time unit groups are this channel access type that is indicated by the first indication information.

In a second manner, the channel access type indicated in the indication information is configured for one or more specified time unit groups in the L time unit groups, while the terminal may determine channel access types based on a rule and/or a parameter in other time unit groups. That is, channel access types corresponding to a part of time unit groups in the plurality of time unit groups, are a channel access type that is indicated by the first indication information. However, channel access types corresponding to another part of time unit groups in the plurality of time unit are determined based on the rule and/or the parameter.

In embodiments of the disclosure, the part of time unit groups (specified one or more time unit groups), which correspond to channel access types that are the channel access type indicated by first indication information, may be indicated by the network device via third indication information, or may be preconfigured (for example, the specified one time unit group is a first time unit group, that is, a time unit group nearest from the first indication information).

In an implementation, the rule and/or the parameter includes at least one of A, B, C or D.

A: whether a current time unit group is within a channel occupation time of a network device.

The network device may indicate the channel occupation time of the network device via a signaling, so that the terminal may determine whether the current time unit group is within the channel occupation time of the network device.

B: whether a current time unit group is within a channel occupation time of the terminal.

For example, the terminal performs the channel sensing based on the determined channel access type and obtains the channel occupation time before transmitting on the first time unit group. Although there is a time interval between the second time unit group and the first time unit group, the second time unit group is still within the channel occupation time (for example, an initial time unit of the second time unit group is still within the channel occupation time or all time units of the second time unit group are still within the channel occupation time). In this case, the terminal may determine that the second time unit group is still within its own channel occupation time.

C: an interval between a current time unit group and a previous time unit group.

For example, in an implementation, the interval between the current time unit group and the previous time unit group. An interval between two time unit groups may be: a time interval between reference moments of two time unit groups. The reference moment of each time unit group may be at least one of the following positions where the time unit group is located: a first slot, a last slot, a first symbol, or a last symbol. For example, the interval between the two time unit groups is an interval between an end symbol of a last time unit of a previous time unit group and a start symbol of a first time unit of a latter time unit group.

D: an interval between a current time unit group and receiving downlink data from a network device.

The interval between the current time unit group and receiving the downlink data from the network device should be understood as an interval between a reference moment of the current time unit group and a reference moment of receiving downlink data from the network device. The reference moment of the current time unit group may be at least one of the following positions where the current time unit group is located: a first slot, a first symbol, a last slot, or a last symbol. The reference moment of the downlink data may be at least one of the following positions where the downlink data is located: a first slot, a first symbol, a last slot, or a last symbol. The downlink data includes at least one of a PDCCH, a PDSCH, a synchronization signaling block (SSB), a channel state information - reference signal (CSI-RS), a positioning reference signal (PRS), or any burst including the SSB.

For example, if there is an interval between two time unit groups, and the terminal may receive data transmitted by the network device within the interval, the interval between the current time unit group and receiving the downlink data transmitted by the network device refers to an interval between a start time of a first time unit of a latter time unit group and an end time when the terminal receives data transmitted by the network device.

In embodiments of the disclosure, a channel access type may be determined based on a rule and/or a parameter by using one or a combination of the following embodiments.

In an embodiment, when the current time unit group is not within the channel occupation time of the network device nor within the channel occupation time of the terminal, the channel access type is determined as a first channel access type.

In an embodiment, when the current time unit group is within the channel occupation time of the network device, and the interval between the current time unit group and receiving the downlink data from the network device is less than or equal to a first threshold, the channel access type is determined as a second channel access type.

In an embodiment, when the current time unit group is within the channel occupation time of the network device, and the interval between the current time unit group and receiving the downlink data from the network device is less than or equal to a second threshold, the channel access type is determined as a third channel access type.

In an embodiment, when the current time unit group is within the channel occupation time of the network device, and the interval between the current time unit group and receiving the downlink data from the network device is less than or equal to a third threshold, the channel access type is determined as a fourth channel access type.

The first threshold is greater than or equal to the second threshold, and the second threshold is greater than or equal to the third threshold.

In an embodiment, when the current time unit group is within the channel occupation time of the terminal, and the interval between the current time unit group and the previous time unit group is less than or equal to a fourth threshold, the channel access type is determined as a second channel access type.

In an embodiment, when the current time unit group is within the channel occupation time of the terminal, and the interval between the current time unit group and the previous time unit group is less than or equal to a fifth threshold, the channel access type is determined as a third channel access type.

In an embodiment, when the current time unit group is within the channel occupation time of the terminal, and the interval between the current time unit group and the previous time unit group is less than or equal to a sixth threshold, the channel access type is determined as a fourth channel access type.

The fourth threshold is greater than or equal to the fifth threshold, and the fifth threshold is greater than or equal to the sixth threshold.

In another implementation, when the terminal determines a plurality of channel access types, and performs a channel sensing on a plurality of discontinuous time unit groups, the terminal may determine corresponding channel access type combinations for a plurality of time unit groups, thereby determining a channel access type corresponding to each time unit group. The channel access type combination includes one or more channel access types.

In an implementation, when a number of the one or more channel access types is more than one, a channel access type combination may be indicated by a codepoint in the first indication information when the channel access type is indicated by the first indication information, that is, there is a corresponding relationship between codepoints and channel access type combinations, and the channel access type combination includes one or more channel access types. For example, when N=2, two channel access types may be indicated by the corresponding relationship between codepoints and channel access type combinations or combination numbers.

In an implementation, when a number of the one or more channel access types is more than one, a channel access type combination may be indicated by a codepoint in the first indication information when the channel access type is indicated by the first indication information, that is, there is a one-to-one corresponding relationship between codepoints and channel access type combinations, and the channel access type combination includes one or more channel access types. For example, when N=2, two channel access types may be indicated by the corresponding relationship between codepoints and channel access type combinations or combination numbers. For example, the two channel access types are a first channel access type and a second channel access type. The channel access type combinations include a combination 1, a combination 2, and a combination 3. The combination 1 includes the first channel access type and the first channel access type. The combination 2 includes the first channel access type and the second channel access type. The combination 3 includes the second channel access type and the second channel access type. A codepoint "00" formed by 2 bits correspondingly indicates the combination 1, "01" correspondingly indicates the combination 2, and "10" correspondingly indicates the combination 3.

In an implementation, when a number of the one or more channel access types is more than one, a channel access type combination may be indicated by a codepoint in the first indication information when the channel access type is indicated by the first indication information, that is, there is a many-to-one corresponding relationship between codepoints and channel access type combinations, and the channel access type combination includes one or more channel access types. For example, when N=2, two channel access types may be indicated by the corresponding relationship between codepoints and channel access type combinations or combination numbers. For example, the two channel access types are a first channel access type and a second channel access type. The channel access type combinations include a combination 1, a combination 2 and a combination 3. The combination 1 includes the first channel access type and the first channel access type; the combination 2 includes the first channel access type and the second channel access type; and the combination 3 includes the second channel access type and the second channel access type. A codepoint "000" formed by 3 bits correspondingly indicates the combination 1 and a parameter 1, "001" correspondingly indicates the combination 2 and the parameter 1, "010" corresponds to the combination 3 and the parameter 1, "011" correspondingly indicates the combination 1 and a parameter 2, "100" correspondingly indicates the combination 2 and the parameter 2, and "101" correspondingly indicates the combination 3 and the parameter 2. That is, "000" and "011" correspond to the combination 1, bur correspond to different parameters. The parameter may be other parameter that needs to be used by the terminal for an uplink transmission, and includes but not limited to at least one of: a CP or a CAPC.

In an implementation, the channel access type(s) included in the channel access type combination is preconfigured, or determined based on a high layer signaling. That is, which channel access type(s) each channel access type combination or combination number corresponds to, may be indicated by a high layer signaling from the network device, or may be preconfigured.

In an example, N channel access types included in the channel access type combination may be same or different. For example, when N=4, the channel access type combination includes the following.

A first combination: a first channel access type, a first channel access type, a first channel access type, a first channel access type.

A second combination: a first channel access type, a first channel access type, a first channel access type, a second channel access type.

A third combination: a first channel access type, a first channel access type, a first channel access type, a third channel access type.

A fourth combination: a first channel access type, a first channel access type, a first channel access type, a fourth channel access type.

A fifth combination: a first channel access type, a second channel access type, a third channel access type, a fourth channel access type.

......

In embodiments of the disclosure, when a number of the one or more channel access types is more than one, there is a corresponding relationship between codepoints and second combinations including channel access type combinations, and the channel access type combination includes one or more channel access types. The corresponding relationship between codepoints and second combinations includes a one-to-one corresponding relationship, or a corresponding relationship of a plurality of codepoints corresponding to one second combination.

That is, the codepoint one to one corresponds to the combination of the channel access type combination and at least one of a CP or a CAPC.

In an implementation, the codepoint one to one corresponds to the combination of the channel access type combination and the CP. For example (a number of bits of the codepoint may support a product of a number of channel access type combinations and a number of CPs, and if the product is I, the number of bits is

$$\lceil \log_2(I) \rceil_.$$

i. 00: for a first channel access type combination and a first CP
ii. 01: for a second channel access type combination and a first CP
iii. 10: for a first channel access type combination and a second CP
iv. 11: for a second channel access type combination and a second CP

In another implementation, the codepoint one to one corresponds to the combination of the channel access type combination and the CAPC. For example (a number of bits of the codepoint may support a product of a number of channel access type combinations and a number of CAPCs, and if the product is I, the number of bits is $\lceil \log_2(I) \rceil$:

    i. 00: for a first channel access type combination and a first CAPC
    ii. 01: for a second channel access type combination and a first CAPC
    iii. 10: for a first channel access type combination and a second CAPC
    iv. 11: for a second channel access type combination and a second CAPC

In another implementation, the codepoint one to one corresponds to the combination of the channel access type combination, the CP, and the CAPC. For example (a number of bits of the codepoint may support a product of a number of channel access type combinations, a number of CAPCs, and a number of CPs, and if a product is I, the number of bits is $\lceil \log_2(I) \rceil$:

    i. 00: for a first channel access type combination and a first CAPC and a first CP
    ii. 01: for a second channel access type combination and a first CAPC and a first CP
    iii. 10: for a first channel access type combination and a second CAPC and a first CP
    iv. 11: for a second channel access type combination and a second CAPC and a first CP

...

It should be understood that, in embodiments of the disclosure, for the combination of the channel access type combination and other parameter, the other parameter includes but not limited to a CP and a CAPC.

It should be understood that, in embodiments of the disclosure, the corresponding relationship between codepoints and second combinations is preconfigured, or determined based on a high layer signaling.

It should be further understood that, a number of channel access types included in the plurality of different channel access type combinations is same or different.

In an implementation, in embodiments of the disclosure, the plurality of discontinuous time units include a plurality of time unit groups, each of the plurality of time unit groups including continuous time units, and there is a corresponding relationship between channel access types included in channel access type combinations and time unit groups.

The corresponding relationship between channel access types and time unit groups may be one-to-one, or may be one-to-many.

In an example, the plurality of discontinuous time units include the plurality of time unit groups, and a number of the plurality of time unit groups is a determined value. The determined value should be understood that the number value may be learned before the terminal receives the first indication information. The number value of the plurality of time unit groups may be indicated by a high layer signaling of the network device or determined based on a preconfiguration. In this case, the number of channel access types included in the plurality of different channel access type combinations is the same, and the number of channel access types included in the channel access type combination is equal to the number of the plurality of time unit groups. That is, each channel access type corresponds to one time unit group. For example, when a number L of L time unit groups included in the M discontinuous uplink time units is determined, the L channel access types are included in the combination, and each channel access type corresponds to one time unit group.

In an example, the plurality of discontinuous time units include the plurality of time unit groups, and a number of the plurality of time unit groups is a determined value. The determined value should be understood that the number value may be learned before the terminal receives the first indication information. The number value of the plurality of time unit groups may be indicated by a high layer signaling of the network device or determined based on a preconfiguration. In this case, the number of channel access types included in the plurality of different channel access type combinations is the same, and the number of the plurality of time unit groups is an integer multiple of the number of channel access types included in the channel access type combination. That is, each channel access type corresponds to one time unit group. For example, when a number L of L time unit groups included in the M discontinuous uplink time units is determined, L/X channel access types are included in the combination, and each channel access type corresponds to X time unit groups. X time unit value corresponding to each channel access type are continuous X time unit groups, or spaced X time unit groups. For example, when there are 2 channel access types and 4 time unit groups, there are two implementations. In a first implementation, a first channel access type is configured for a first time unit group and a second time unit group, and a second channel access type is configured for a third time unit group and a fourth time unit group; in a second implementation, a first channel access type is configured for a first time unit group and a third time unit group, and a second channel access type is configured for a second time unit group and a fourth time unit group.

In another example, when the plurality of discontinuous time units include the plurality of time unit groups, a number of the plurality of time unit groups is not determined. That is, a number of the plurality of time unit groups indicated by different first indication information may be dynamically changed. In this case, a number of channel access types included in the plurality of different channel access type combinations may be greater than or equal to the number of the plurality of time unit groups, and previous channel access types in the channel access type combination are taken to correspond to each time unit group. For example, when L time unit groups are included in the M discontinuous uplink time units, previous L channel access types included in each combination are taken, and each of the channel access types corresponds to one time unit group.

In the method for data transmission or reception provided in embodiments of the disclosure, when the first indication information (one DCI) schedules the plurality of discontinuous time units, the one or more channel access types may be determined, so that the terminal may determine channel access type(s) corresponding to the plurality of discontinuous time units.

Based on the same concept, a method for data transmission or reception is further provided in embodiments of the disclosure and performed by a network device.

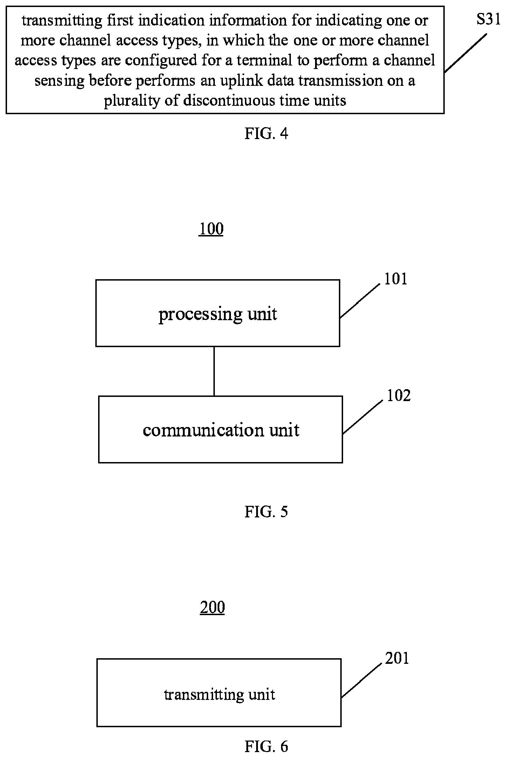

FIG. 4 is a flowchart illustrating a method for data transmission or reception according to some embodiments. As illustrated in FIG. 4, the method for data transmission or reception is performed by a network device and includes the following step.

At step S31, first indication information for indicating one or more channel access types is transmitted.

The one or more channel access types are configured for a terminal to perform a channel sensing before performs an uplink data transmission on a plurality of discontinuous time units. For example, the terminal may sense a channel before a corresponding time unit based on the channel access type.

In an implementation, the first indication information includes a first indication field, the first indication field includes one or more codepoints, and there is a corresponding relationship between codepoints and channel access types.

In an implementation, in the method for data transmission or reception provided in embodiments of the disclosure, the network device may transmit second indication information for indicating the corresponding relationship between codepoints and channel access types.

In an implementation, when a number of the one or more channel access types is one, there is a one-to-one corresponding relationship between codepoints and channel access types.

In an implementation, when a number of the one or more channel access types is one, there is a one-to-one corresponding relationship between codepoints and first combinations including channel access types. The first combination includes at least one of:

a combination between a channel access type and a cyclic prefix;

a combination between a channel access type and a channel access priority class; or

a combination among a channel access type, a cyclic prefix, and a channel access priority class.

In the method for data transmission or reception provided in embodiments of the disclosure, the plurality of discontinuous time units include a plurality of time unit groups, and each of the plurality of time unit groups includes continuous time units.

In an implementation, a number of the one or more channel access types is more than one, there is a corresponding relationship between codepoints and channel access type combinations, and the channel access type combination includes one or more channel access types. The corresponding relationship between codepoints and channel access type combinations includes a one-to-one corresponding relationship, or a corresponding relationship of a plurality of codepoints corresponding to one channel access type combination.

In an implementation, when a number of the one or more channel access types is more than one, a channel access type combination may be indicated by a codepoint in the first indication information when the channel access type is indicated by the first indication information, that is, there is a one-to-one corresponding relationship between codepoints and channel access type combinations, and the channel access type combination includes one or more channel access types. For example, when N=2, two channel access types may be indicated by a corresponding relationship between codepoints and channel access type combinations or combination numbers. For example, the two channel access types are a first channel access type and a second channel access type. The channel access type combinations include a combination 1, a combination 2 and a combination 3. The combination 1 includes the first channel access type and the first channel access type. The combination 2 includes the first channel access type and the second channel access type; and the combination 3 includes the second channel access type and the second channel access type. A codepoint "00" formed by 2 bits correspondingly indicates the combination 1, "01" correspondingly indicates the combination 2, and "10" correspondingly indicates the combination 3.

In an implementation, when a number of the one or more channel access types is more than one, a channel access type combination may be indicated by a codepoint in the first indication information when the channel access type is indicated by the first indication information, that is, there is a many-to-one corresponding relationship between codepoints and channel access type combinations, and the channel access type combination includes one or more channel access types. For example, when N=2, two channel access types may be indicated by the corresponding relationship between codepoints and channel access type combinations or combination numbers. For example, the two channel access types are a first channel access type and a second channel access type. The channel access type combinations include a combination 1, a combination 2 and a combination 3. The combination 1 includes the first channel access type and the first channel access type; the combination 2 includes the first channel access type and the second channel access type; and the combination 3 includes the second channel access type and the second channel access type. A codepoint "000" formed by 3 bits correspondingly indicates the combination 1 and a parameter 1, "001" correspondingly indicates the combination 2 and the parameter 1, "010" corresponds to the combination 3 and the parameter 1, "011" correspondingly indicates the combination 1 and a parameter 2, "100" correspondingly indicates the combination 2 and the parameter 2, and "101" correspondingly indicates the combination 3 and the parameter 2. That is, "000" and "011" correspond to the combination 1, bur corresponds to different parameters. The parameter may be other parameter that needs to be used by the terminal for an uplink transmission, and includes but not limited to at least one of: a CP or a CAPC.

In an implementation, a number of the one or more channel access types is more than one, there is a corresponding relationship between codepoints and second combinations including channel access type combinations, and the channel access type combination includes one or more channel access types. The second combination includes at least one of:

a combination between a channel access type combination and a cyclic prefix;
a combination between a channel access type combination and a channel access priority class; or
a combination among a channel access type combination, a cyclic prefix, and a channel access priority class.

It should be understood that, in embodiments of the disclosure, for a combination of the channel access type combination and other parameter, the other parameter includes but not limited to a CP and a CAPC.

In an implementation, in the method for data transmission or reception provided in embodiments of the disclosure, the network device may transmit third indication information for indicating the channel access type(s) included in the channel access type combination.

In an implementation, in the method for data transmission or reception provided in embodiments of the disclosure, the network device may further transmit fourth indication information for indicating the corresponding relationship between codepoints and second combinations.

The corresponding relationship between codepoints and second combinations may be a one-to-one corresponding relationship, may be a corresponding relationship of a plurality of codepoints corresponding to one second combination.

In an implementation, a number of channel access types included in the plurality of different channel access type combinations is the same or different.

In an implementation, in embodiments of the disclosure, the plurality of discontinuous time units include the plurality of time unit groups, each of the plurality of time unit groups includes continuous time units, and there is a corresponding relationship between channel access types included in channel access type combinations and the time unit groups.

The corresponding relationship between channel access types and time unit groups may be one-to-one, or may be one-to-many.

In an example, the plurality of discontinuous time units include the plurality of time unit groups, and a number of the plurality of time unit groups is a determined value. The determined value should be understood that the number value may be learned before the terminal receives the first indication information. The number value of the plurality of time unit groups may be indicated by a high layer signaling of the network device or determined based on a preconfiguration. In an implementation, the number of channel access types included in the plurality of different channel access type combinations is the same, and the number of channel access types included in the channel access type combination is equal to the number of the plurality of time unit groups. That is, each channel access type corresponds to one time unit group. For example, when a number L of L time unit groups included in the M discontinuous uplink time units is determined, L channel access types are included in the combination, and each channel access type corresponds to one time unit group.

In an example, the plurality of discontinuous time units include the plurality of time unit groups, and a number of the plurality of time unit groups is a determined value. The determined value should be understood that the number value may be learned before the terminal receives the first indication information. The number value of the plurality of time unit groups may be indicated by a high layer signaling of the network device or determined based on a preconfiguration. In this case, the number of channel access types included in the plurality of different channel access type combinations is the same, and the number of the plurality of time unit groups is an integer multiple of the number of channel access types included in the channel access type combination. That is, each channel access type corresponds to one time unit group. For example, when a number L of L time unit groups included in the M discontinuous uplink time units is determined, L/X channel access types are included in the combination, and each channel access type corresponds to X time unit groups. X time unit values corresponding to each channel access type are continuous X time unit groups, or spaced X time unit groups. For example, when there are 2 channel access types and 4 time unit groups, there are two implementations. In a first implementation, a first channel access type is configured for a first time unit group and a second time unit group, and a second channel access type is configured for a third time unit group and a fourth time unit group; in a second implementation, a first channel access type is configured for a first time unit group and a third time unit group, and a second channel access type is configured for a second time unit group and a fourth time unit group.

In another example, when the plurality of discontinuous time units include the plurality of time unit groups, a number of the plurality of time unit groups is not determined. That is, a number of the plurality of time unit groups indicated by different first indication information may be dynamically changed. In this case, a number of channel access types included in the plurality of different channel access type combinations may be greater than or equal to the number of the plurality of time unit groups, and previous channel access types in the channel access type combination are taken to correspond to each time unit group. For example, when L time unit groups are included in the M discontinuous uplink time units, previous L channel access types included in each combination are taken, and each of the channel access types corresponds to one time unit group.

It should be understood that, the method for data transmission or reception performed by the network device provided in embodiments of the disclosure, is similar to the method for data transmission or reception performed by the terminal, which will not be repeated herein.

It should be further understood that, the method for data transmission or reception provided in embodiments of the disclosure is applicable to an implementation process that an interaction between the terminal and the network device achieves data transmission or reception. In the method for data transmission or reception achieved by the interaction between the terminal and the network device, the terminal and the network device respectively possess related functions involved in the above embodiments, which will not be repeated herein.

It should be noted that, those skilled in the art may understand that various implementations/embodiments involved in embodiments of the disclosure may be used in combination with the previous embodiments and may be used independently. Whether used independently or used in combination with the previous embodiments, the implementation principle is similar. In embodiments of the disclosure, part of embodiments are illustrated by the implementation together. It should be understood by those skilled in the art that examples are not a limitation of embodiments of the disclosure.

Based on the same conception, an apparatus for data transmission or reception is further provided in embodiments of the disclosure.

It should be understood that, the apparatus for data transmission or reception provided in embodiments of the disclosure includes corresponding hardware structures and/or software modules that perform various functions in order to achieve the above functions. In combination with modules and algorithm steps in examples described in embodiments of the disclosure, the embodiments of the disclosure may be implemented in the form of hardware or a combination of hardware and computer software. Whether a certain function is executed by hardware or computer software driving hardware depends on specific applications and design constraints of technical solutions. Those skilled in the art may adopt different manners for each specific application to implement the described functions, but such implementation should not be considered as beyond the scope of the technical solutions in embodiments of the disclosure.

FIG. 5 is a block diagram illustrating an apparatus for data transmission or reception according to some embodiments. As illustrated in FIG. 5, the apparatus 100 for data transmission or reception includes a processing unit 101 and a communication unit 102.

The processing unit 101 is configured to determine one or more channel access types, and determine a plurality of discontinuous time units. The communication unit 102 is configured to sense a channel before a corresponding time unit based on the channel access type; and perform an uplink data transmission on the corresponding time unit in response to sensing that the channel is idle.

In an implementation, the processing unit 101 determines the one or more channel access types based on first indication information; in which the first indication information includes a first indication field, the first indication field includes one or more codepoints, and there is a corresponding relationship between codepoints and channel access types.

In an implementation, the processing unit 101 determines the corresponding relationship between codepoints and channel access types by at least one of: based on a predefinition; or based on second indication information.

In an implementation, a number of the one or more channel access types is one, and there is a one-to-one corresponding relationship between codepoints and channel access types.

In implementation, a number of the one or more channel access types is one, and there is a one-to-one corresponding relationship between codepoints and first combinations including the one or more channel access types.

The first combination includes at least one of: a combination between a channel access type and a cyclic prefix; a combination between a channel access type and a channel access priority class; or a combination among a channel access type, a cyclic prefix, and a channel access priority class.

In an implementation, the plurality of discontinuous time units include a plurality of time unit groups, and each of the plurality of time unit groups includes continuous time units.

In an implementation, channel access types corresponding to the plurality of time unit groups are a channel access type indicated by the first indication information.

In an implementation, channel access types corresponding to a part of time unit groups in the plurality of time unit groups are a channel access type indicated by the first indication information, and channel access types corresponding to another part of time unit groups in the plurality of time unit groups are determined based on a rule and/or a parameter.

In an implementation, the rule and/or the parameter includes at least one of:

whether a current time unit group is within a channel occupation time of a network device; whether a current time unit group is within a channel occupation time of the terminal; an interval between a current time unit group and a previous time unit group; or an interval between a current time unit group and receiving downlink data from a network device.

In an implementation, a number of the one or more channel access types is more than one, there is a corresponding relationship between codepoints and channel access type combinations, and the channel access type combination includes one or more channel access types.

In an implementation, a number of the one or more channel access types is more than one, there is a corresponding relationship between codepoints and second combinations including channel access type combinations, and the channel access type combination includes one or more channel access types. The second combination includes at least one of: a combination between a channel access type combination and a cyclic prefix; a combination between a channel access type combination and a channel access priority class; or a combination among a channel access type combination, a cyclic prefix, and a channel access priority class.

In an implementation, the one or more channel access types included in the channel access type combination is preconfigured, or determined based on a high layer signaling.

In an implementation, the corresponding relationship between codepoints and second combinations is preconfigured, or determined based on a high layer signaling.

In an implementation, a number of channel access types included in the plurality of different channel access type combinations is the same or different.

In an implementation, the plurality of discontinuous time units include a plurality of time unit groups, each of the plurality of time unit groups including continuous time units, and there is a corresponding relationship between channel access types included in channel access type combinations and time unit groups.

In an implementation, in response to the plurality of discontinuous time units including the plurality of time unit groups and a number of the plurality of time unit groups being a fixed value, a number of the channel access types included in the plurality of different channel access type combinations is the same, and each of the channel access types corresponds to one time unit group.

In an implementation, in response to the plurality of discontinuous time units including the plurality of time unit groups, a number of channel access types included in the plurality of different channel access type combinations is determined based on a number of the plurality of time unit groups, and each of the channel access types corresponds to one time unit group.

FIG. 6 is a block diagram illustrating an apparatus for data transmission or reception according to some embodiments. As illustrated in FIG. 6, the apparatus 200 for data transmission or reception may include a transmitting unit 201.

The transmitting unit 201 is configured to transmit first indication information for indicating one or more channel access types; in which the one or more channel access types are configured for a terminal to perform a channel sensing before performs an uplink data transmission on a plurality of discontinuous time units.

In an implementation, the first indication information includes a first indication filed, the first indication filed includes one or more codepoints, and there is a corresponding relationship between codepoints and channel access types.

In an implementation, the transmitting unit 201 is further configured to transmit second indication information for indicating the corresponding relationship between codepoints and channel access types.

In an implementation, a number of the one or more channel access types is one, and there is a one-to-one corresponding relationship between codepoints and channel access types.

In implementation, a number of the one or more channel access types is one, and there is a one-to-one corresponding relationship between codepoints and first combinations including the one or more channel access types.

The first combination includes at least one of: a combination between a channel access type and a cyclic prefix; a combination between a channel access type and a channel access priority class; or a combination among a channel access type, a cyclic prefix, and a channel access priority class.

In an implementation, the plurality of discontinuous time units include a plurality of time unit groups, and each of the plurality of time unit groups includes continuous time units.

In an implementation, a number of the one or more channel access types is more than one, there is a corresponding relationship between codepoints and channel access type combinations, and the channel access type combination includes one or more channel access types.

In an implementation, a number of the one or more channel access types is more than one, there is a corresponding relationship between codepoints and second combinations including channel access type combinations, and the channel access type combination includes one or more channel access types. The second combination includes at least one of:

a combination between a channel access type combination and a cyclic prefix; a combination between a channel access type combination and a channel access priority class; or a combination among a channel access type combination, a cyclic prefix, and a channel access priority class.

In an implementation, the transmitting unit 201 is further configured to: transmit third indication information for indicating the one or more channel access types included in the channel access type combination.

In an implementation, the transmitting unit 201 is further configured to transmit fourth indication information for indicating the corresponding relationship between codepoints and second combinations.

In an implementation, a number of channel access types included in the plurality of different channel access type combinations is the same or different.

In an implementation, the plurality of discontinuous time units include a plurality of time unit groups, each of the plurality of time unit groups including continuous time units, and there is a corresponding relationship between channel access types included in channel access type combinations and the time unit groups.

In an implementation, in response to the plurality of discontinuous time units including the plurality of time unit groups and a number of the plurality of time unit groups being a fixed value, a number of the channel access types included in the plurality of different channel access type combinations is the same, and each of the channel access types corresponds to one time unit group.

In an implementation, in response to the plurality of discontinuous time units including the plurality of time unit groups, a number of channel access types included in the plurality of different channel access type combinations is determined based on a number of the plurality of time unit groups, and each of the channel access types corresponds to one time unit group.

With respect to the apparatuses in the above embodiments, the specific manners for performing operations for individual modules therein have been described in detail in the embodiments regarding the methods, which will not be elaborated herein.

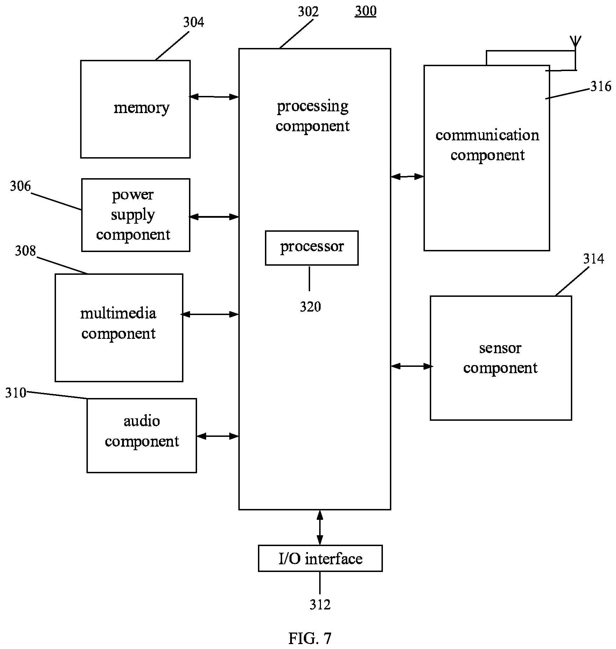

FIG. 7 is a block diagram illustrating a device for data transmission or reception according to some embodiments. For example, the device 300 may be a mobile phone, a computer, a digital broadcasting terminal, a messaging device, a game console, a tablet device, a medical equipment, a fitness equipment, a personal digital assistant, etc.

As illustrated in FIG. 7, the device 300 may include one or more components: a processing component 302, a memory 304, a power supply component 306, a multimedia component 308, an audio component 310, an input/output (I/O) interface 312, a sensor component 314, and a communication component 316.

The processing component 302 generally controls the whole operation of the device 300, such as operations related to display, phone call, data communication, camera operation and recording operation. The processing component 302 may include one or more processors 320 to perform instructions, to complete all or part of steps of the above method. In addition, the processing component 302 may include one or more modules for the convenience of interaction between the processing component 302 and other components. For example, the processing component 302 may include a multimedia module for the convenience of interaction between the multimedia component 308 and the processing component 302.

The memory 304 is configured to store all types of data to support the operation of the device 300. Examples of the data include the instructions of any applications or methods operated on the device 300, contact data, phone book data, messages, pictures, videos, etc. The memory 304 may be implemented by any type of volatile or non-volatile storage devices or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power supply component 306 may provide power supply for all components of the device 300. The power supply component 306 may include a power supply management system, one or more power supplies, and other units related to generating, managing and distributing power for the device 300.

The multimedia component 308 includes an output interface screen provided between the device 300 and the user. In some embodiments, the screen may include a liquid crystal display (LCD) and a touch panel (TP). When the screen includes a touch panel, the screen may be implemented as a touch screen to receive input signals from the user. The touch panel includes one or more touch sensors to sense touch, slide and gestures on the touch panel. The touch sensor may not only sense the boundary of touch or slide action, but also detect the duration and pressure related to the touch or slide operation. In some embodiments, the multimedia component 308 includes a front camera and/or a rear camera. When the device 300 is in an operation mode, such as a shooting mode or a video mode, the front camera or the rear camera may receive external multimedia data. Each front camera and rear camera may be a fixed optical lens system or an optical lens system with a focal length and an optical zoom capacity.

The audio component 310 is configured as an output and/or input signal. For example, the audio component 310 includes a microphone (MIC). When the device 300 is in operation mode, such as call mode, record mode, and speech recognition mode, the microphone is configured to receive external audio signals. The audio signals received may be further stored in the memory 304 or sent via the communication component 316. In some embodiments, the audio component 310 further includes a speaker configured to output an audio signal.

The I/O interface 312 provides an interface for the processing component 302 and the peripheral interface module, and the peripheral interface module may be a keyboard, a click wheel, a button, etc. The buttons may include but not limited to a home button, a volume button, a start button and a lock button.

The sensor component 314 includes one or more sensors, configured to provide various aspects of status assessment for the device 300. For example, the sensor component 314 may detect the on/off state of the device 300 and the relative positioning of the component. For example, the component is a display and a keypad of the device 300. The sensor component 314 may further detect the location change of the device 300 or one component of the device 300, the presence or absence of contact between the user and the device 300, the orientation or acceleration/deceleration of the device 300, and the temperature change of the device 300. The sensor component 314 may include a proximity sensor, which is configured to detect the existence of the objects nearby without any physical contact. The sensor component 314 may further include a light sensor such as a CMOS or CCD image sensor, which is configured to use in imaging applications. In some embodiments, the sensor component 314 may further include an acceleration transducer, a gyroscope sensor, a magnetic sensor, a pressure sensor or a temperature sensor.

The communication component 316 is configured for the convenience of wire or wireless communication between the device 300 and other devices. The device 300 may access wireless networks based on any communication standard, such as Wi-Fi, 2G or 3G, or their combination. In some embodiments, the communication component 316 receives broadcast signals or broadcast-related information from an external broadcast management system via a broadcast channel. In some embodiments, the communication component 316 further includes a near field communication (NFC) module to facilitate short-range communication. For example, an NFC module may be implemented based on a radio frequency identification (RFID) technology, an infrared data association (IRDA) technology, an ultra-wideband (UWB) technology, Bluetooth (BT) technology and other technologies.

In some embodiments, the device 300 may be implemented by one or more application specific integrated circuits(ASIC), digital signal processors (DSP), digital signal processing devices (DSPD), programmable logic devices (PLD), field programmable gate arrays (FPGA), controllers, microcontrollers, microprocessors or other electronics components, which is configured to perform the above method.

In some embodiments, a non-transitory computer readable storage medium is further provided which includes instructions, such as the memory 304 including instructions. The instructions may be executed by the processor 320 of the device 300 to complete the above methods. For example, the non-transitory computer-readable storage medium may be a ROM, a random access memory (RAM), a CD-ROM, a magnetic tape, a floppy disk, an optical data storage device, etc.

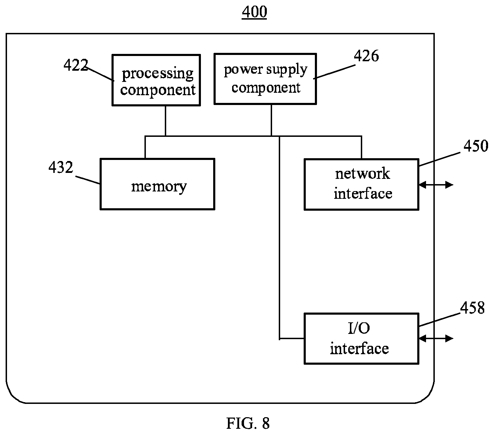

FIG. 8 is a block diagram illustrating a device for data transmission or reception according to some embodiments. For example, the device 400 may be provided as a network device. As illustrated in FIG. 8, the device 400 includes a processing component 422, which further includes one or more processors, and memory resources represented by a memory 432, which are configured to store instructions executable by the processing component 422, for example, an application. The application stored in the memory 432 may include one or more modules each of which corresponds to a set of instructions. In addition, the processing component 422 is configured to execute instructions, to perform the above method.

The device 400 may further include one power supply component 426 configured to execute power management of the device 400, and one wired or wireless network interface 450 configured to connect the device 400 to a network, and one input/output(I/O) interface 458. The device 400 may operate an operating system stored in the memory 432, for example, Windows Server™, Mac OS X™, Unix™, Linux™, FreeBSD™.

In some embodiments, a non-transitory computer-readable storage medium including instructions is further provided, for example, the memory 432 including instructions. The instructions may be executed by the processing component 422 of the device 400 to complete the above methods. For example, the non-transitory computer-readable storage medium may be a ROM, a random access memory (RAM), a CD-ROM, a magnetic tape, a floppy disk, an optical data storage device, etc.

It should be further understood that, "a plurality of" in the disclosure means two or above, which is similar to other quantifiers. The term "and/or", describes the relationship of the association objects, indicating that there may three relationships existing, for example, A and/or B, may represent: existing A only, existing both A and B, or existing B only. The character "/" generally means the contextual objects is a kind of "or" relationship. The singular forms "a", "the" and "said" are also intended to include plural forms, unless the context clearly indicates otherwise.

It should be further understood that, although the terms "first", "second", "third", etc. may be configured to describe various information, such information shall not be limited to these terms. These terms are only used to distinguish the same type of information, rather than indicate a particular order or importance degree. In fact, "first", "second", and other similar descriptions may be used interchangeably. For example, subject to the scope of this disclosure, first information may also be referred to as second information, and similarly, and second information may also be referred to as first information.

It should be further understood that, even though operations are described in the drawings in a particular order, it should not be understood as requiring that such operations be performed in the particular order shown or in sequential order, or that all illustrated operations be performed to obtain desirable results. In certain circumstances, multitasking and parallel processing may be advantageous.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and examples be considered as exemplary only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A method for data transmission or reception, performed by a terminal, comprising:

   determining one or more channel access types and a plurality of discontinuous time units;
   sensing a channel before a corresponding time unit based on the channel access type; and
   performing an uplink data transmission on the corresponding time unit in response to sensing that the channel is idle.

2. The method according to claim 1, wherein determining the one or more channel access types comprises:

   determining the one or more channel access types based on first indication information;
   wherein the first indication information comprises a first indication field, the first indication field comprises one or more codepoints, and there is a corresponding relationship between codepoints and channel access types.

3. The method according to claim 2, wherein the corresponding relationship between codepoints and channel access types is determined at least one of:

based on a predefinition; or
based on second indication information.

4. The method according to claim 2 or 3, wherein a number of the one or more channel access types is one, and there is a one-to-one corresponding relationship between codepoints and channel access types.

5. The method according to claim 2 or 3, wherein a number of the one or more channel access types is one, and there is a one-to-one corresponding relationship between codepoints and first combinations comprising channel access types; and
the first combination comprises at least one of

   a combination between a channel access type and a cyclic prefix;
   a combination between a channel access type and a channel access priority class; or
   a combination among a channel access type, a cyclic prefix, and a channel access priority class.

6. The method according to any one of claims 1 to 5, wherein the plurality of discontinuous time units comprise a plurality of time unit groups, and each of the plurality of time unit groups comprises continuous time units.

7. The method according to claim 6, wherein channel access types corresponding to the plurality of time unit groups are a channel access type indicated by the first indication information.

8. The method according to claim 6, wherein channel access types corresponding to a part of time unit groups in the plurality of time unit groups are a channel access type indicated by the first indication information, and channel access types corresponding to another part of time unit groups in the plurality of time unit groups are determined based on a rule and/or a parameter.

9. The method according to claim 8, wherein the rule and/or the parameter comprises at least one of:

   whether a current time unit group is within a channel occupation time of a network device;
   whether a current time unit group is within a channel occupation time of the terminal;
   an interval between a current time unit group and a previous time unit group; or
   an interval between a current time unit group and receiving downlink data from a network device.

10. The method according to claim 2 or 3, wherein a number of the one or more channel access types is more than one, there is a corresponding relationship between codepoints and channel access type combinations, and the channel access type combination comprises one or more channel access types.

11. The method according to claim 2 or 3, wherein a number of the one or more channel access types is more than one, there is a corresponding relationship between codepoints and second combinations comprising channel access type combinations, and the channel access type combination comprises one or more channel access types; and
the second combination comprises at least one of

a combination between a channel access type combination and a cyclic prefix;
a combination between a channel access type combination and a channel access priority class; or
a combination among a channel access type combination, a cyclic prefix, and a channel access priority class.

12. The method according to claim 10 or 11, wherein the one or more channel access types comprised in the channel access type combination is preconfigured or determined based on a high layer signaling.

13. The method according to claim 11, wherein the corresponding relationship between codepoints and second combinations is preconfigured or determined based on a high layer signaling.

14. The method according to any one of claims 10 to 13, wherein the plurality of discontinuous time units comprise a plurality of time unit groups, each of the plurality of time unit groups comprises continuous time units, and there is a corresponding relationship between channel access types comprised in channel access type combinations and time unit groups.

15. A method for data transmission or reception, performed by a network device, comprising:

transmitting first indication information for indicating one or more channel access types; wherein,
the one or more channel access types are configured for a terminal to perform a channel sensing before performs an uplink data transmission on a plurality of discontinuous time units.

16. The method according to claim 15, wherein the first indication information comprises a first indication field, the first indication field comprises one or more codepoints, and there is a corresponding relationship between codepoints and channel access types.

17. The method according to claim 16, further comprising:
transmitting second indication information for indicating the corresponding relationship between codepoints and channel access types.

18. The method according to claim 16 or 17, wherein a number of the one or more channel access types is one, and there is a one-to-one corresponding relationship between codepoints and channel access types.

19. The method according to claim 16 or 17, wherein a number of the one or more channel access types is one, and there is a one-to-one corresponding relationship between codepoints and first combinations comprising channel access types; and
the first combination comprises at least one of

a combination between a channel access type and a cyclic prefix;
a combination between a channel access type and a channel access priority class; or
a combination among a channel access type, a cyclic prefix, and a channel access priority class.

20. The method according to any one of claims 15 to 19, wherein the plurality of discontinuous time units comprise a plurality of time unit groups, and each of the plurality of time unit groups comprises continuous time units.

21. The method according to claim 16 or 17, wherein a number of the one or more channel access types is more than one, there is a corresponding relationship between codepoints and channel access type combinations, and the channel access type combination comprises one or more channel access types.

22. The method according to claim 16 or 17, wherein a number of the one or more channel access types is more than one, there is a corresponding relationship between codepoints and second combinations comprising channel access type combinations, and the channel access type combination comprises one or more channel access types; and
the second combination comprises at least one of

a combination between a channel access type combination and a cyclic prefix;
a combination between a channel access type combination and a channel access priority class; or
a combination among a channel access type combination, a cyclic prefix, and a channel access priority class.

23. The method according to claim 21 or 22, further comprising:
transmitting third indication information for indicating the one or more channel access types comprised in the channel access type combination.

24. The method according to claim 22, further comprising:
transmitting fourth indication information for indicating the corresponding relationship between codepoints and second combinations.

25. The method according to any one of claims 21 to 24, wherein the plurality of discontinuous time units comprise a plurality of time unit groups, each of the plurality of time unit groups comprises continuous time units, and there is a corresponding relationship between channel access types comprised in channel access type combinations and time unit groups.

26. An apparatus for data transmission or reception, comprising:

a processing unit, configured to determine one or more channel access types and a plurality of discontinuous time units; and
a communication unit, configured to sense a channel before a corresponding time unit based on the channel access type; and perform an uplink data transmission on the corresponding time unit in response to sensing that the channel is idle.

27. An apparatus for data transmission or reception, implemented in a network device, comprising:

a transmitting unit, configured to transmit first indication information for indicating one or more channel access types; wherein,
the one or more channel access types are configured for a terminal to perform a channel sensing before performs an uplink data transmission on a plurality of discontinuous time units.

28. A device for data transmission or reception, comprising:

a processor; and
a memory for storing instructions executable by the processor;
wherein the processor is configured to perform the method of any one of claims 1 to 14 or perform the method of any one of claims 15 to 25.

29. A storage medium stored with instructions, wherein when the instructions in the storage medium are executed by a processor of a terminal, the terminal is caused to perform the method of any one of claims 1 to 14, or when the instructions in the storage medium are executed by a processor of a network device, the network device is caused to perform the method of any one of claims 15 to 25.

FIG. 1

S11

determining one or more channel access types and a plurality of discontinuous time units

S12

sensing a channel before a corresponding time unit based on the channel access type, and performing an uplink data transmission on the corresponding time unit in response to sensing that the channel is idle

FIG. 2

S21

determining one or more channel access types based on first indication information

FIG. 3

transmitting first indication information for indicating one or more channel access types, in which the one or more channel access types are configured for a terminal to perform a channel sensing before performs an uplink data transmission on a plurality of discontinuous time units

S31

FIG. 4

100

processing unit

101

communication unit

102

FIG. 5

200

transmitting unit

201

FIG. 6

FIG. 7

FIG. 8

<table>
<tr><td colspan="2"><b>INTERNATIONAL SEARCH REPORT</b></td><td>International application No.<br><br><b>PCT/CN2021/086018</b></td></tr>
</table>

**A. CLASSIFICATION OF SUBJECT MATTER**

H04W 72/12(2009.01)i; H04W 74/00(2009.01)i; H04W 74/08(2009.01)i

According to International Patent Classification (IPC) or to both national classification and IPC

**B. FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNABS; CNTXT; CNKI; VEN; USTXT; EPTXT; WOTXT; 3GPP: 信道接入类型, 非连续, 时间单元, 感知, 信道, 空闲, 数据, 传输, 非授权, non-consecutive, non-continuous, discontinuous, time, slot, channel, idle, access, type, unlicensed, DCI

**C. DOCUMENTS CONSIDERED TO BE RELEVANT**

| Category* | Citation of document, with indication, where appropriate, of the relevant passages | Relevant to claim No. |
|---|---|---|
| X | US 2020146062 A1 (XU, K. et al.) 07 May 2020 (2020-05-07)<br>claims 1-20, and description, paragraphs [0191]-[0526] | 1-29 |
| X | WO 2021060958 A1 (SAMSUNG ELECTRONICS CO., LTD.) 01 April 2021 (2021-04-01)<br>description, paragraphs [74]-[694] | 1-29 |
| A | CN 108702774 A (BEIJING XIAOMI MOBILE SOFTWARE CO., LTD.) 23 October 2018 (2018-10-23)<br>entire document | 1-29 |
| A | CN 110958085 A (BEIJING SAMSUNG COMMUNICATION TECHNOLOGY RESEARCH CO., LTD. et al.) 03 April 2020 (2020-04-03)<br>entire document | 1-29 |
| A | CN 106102180 A (YULONG COMPUTER TELECOMMUNICATION SCIENTIFIC (SHENZHEN) CO., LTD.) 09 November 2016 (2016-11-09)<br>entire document | 1-29 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 December 2021** | **20 December 2021** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

<table>
<tr><td colspan="2" align="center">**INTERNATIONAL SEARCH REPORT**<br>**Information on patent family members**</td><td colspan="2">International application No.<br><br>**PCT/CN2021/086018**</td></tr>
</table>

| Patent document cited in search report | | | Publication date (day/month/year) | Patent family member(s) | | | Publication date (day/month/year) |
|---|---|---|---|---|---|---|---|
| US | 2020146062 | A1 | 07 May 2020 | | None | | |
| WO | 2021060958 | A1 | 01 April 2021 | CN | 112584516 | A | 30 March 2021 |
| CN | 108702774 | A | 23 October 2018 | EP | 3735081 | A1 | 04 November 2020 |
| | | | | EP | 3735081 | A4 | 16 December 2020 |
| | | | | US | 2021076408 | A1 | 11 March 2021 |
| | | | | WO | 2019127109 | A1 | 04 July 2019 |
| | | | | IN | 202027028247 | A1 | 02 October 2020 |
| CN | 110958085 | A | 03 April 2020 | EP | 3857801 | A1 | 04 August 2021 |
| | | | | WO | 2020067815 | A1 | 02 April 2020 |
| CN | 106102180 | A | 09 November 2016 | US | 2021289523 | A1 | 16 September 2021 |
| | | | | WO | 2018023938 | A1 | 08 February 2018 |
| | | | | CN | 106102180 | B | 10 December 2019 |

Form PCT/ISA/210 (patent family annex) (January 2015)